# EUROPÄISCHE PATENTANMELDUNG

(11) **EP 1 391 701 A2**
(43) Veröffentlichungstag der Anmeldung: **25.02.2004**
(21) Anmeldenummer: 03014352.3
(22) Anmeldetag: 26.06.2003
(51) Int. Cl.: G01F 1/84

(54) **Massendurchflussmessgerät**

(30) Priorität: 22.07.2002 DE 10233307
(71) Anmelder: Krohne AG, CH-4003 Basel (CH)
(72) Erfinder: Rolph, Chris N., Hartwell, Northampton NN7 2HA (GB)
(74) Vertreter: Gesthuysen, von Rohr & Eggert

(57) **Zusammenfassung**

Dargestellt und beschrieben ist ein Massendurchflußmeßgerät, das nach dem Coriolis-Prinzip arbeitet, mit einem Gehäuse (1), einer Coriolis-Leitung (2) und einer Anschlußeinrichtung (3) zum Anschließen des Massendurchflußmeßgeräts an einen Anschluß (4) eines Leitungssystems (5).

Erfindungsgemäß ist vorgesehen, daß die Anschlußeinrichtung (3) des Massendurchflußmeßgeräts ein Verbindungsteil (8) und ein davon separates Befestigungsteil (9) aufweist, das Verbindungsteil (8) mit einem Ende der Coriolis-Leitung (2) verschweißt ist sowie für die Herstellung einer leitenden Verbindung der Coriolis-Leitung (2) mit dem Leitungssystem (5) über den Anschluß (4) des Leitungssystems (5) vorgesehen ist und das Befestigungsteil (9) mit dem Gehäuse (1) des Massendurchflußmeßgeräts fest verbunden ist sowie für die Befestigung des Massendurchflußmeßgeräts an dem Anschluß (4) des Leitungssystems (5) vorgesehen ist. Damit wird ein einfach herstellbarer Lebensmittelanschluß für ein Massendurchflußmeßgerät bereitgestellt.

## Beschreibung

Die Erfindung betrifft ein Massendurchflußmeßgerät, das nach dem Coriolis-Prinzip arbeitet, mit einem Gehäuse, einer Coriolis-Leitung und einer Anschlußeinrichtung zum Anschließen des Massendurchflußmeßgeräts an den Anschluß eines Leitungssystems.

Massendurchflußmeßgeräte der eingangs beschriebenen Art werden in unterschiedlichen technischen Bereichen eingesetzt, in denen es nicht nur auf die genaue Bestimmung des Volumendurchflusses ankommt, sondern Kenntnisse über die Masse eines Mediums erforderlich sind, die das Massendurchflußmeßgerät durchflossen hat. Entsprechende Anforderungen bestehen unter anderem im Lebensmittelbereich, also bei der Durchflußmessung von Flüssigkeiten bzw. pastösen Stoffen, wie Flüssigzucker, Fruchtsäften und Limonaden, Sahne, Eigelb, Eiscreme usw. Bei der Durchflußmessung dieser Stoffe bzw. anderer Lebensmittel muß unter solchen Bedingungen gearbeitet werden, die bestimmten hygienischen Standards entsprechen. Ansonsten ist ein Verunreinigen und Verderben der Lebensmittel, insbesondere eine Infizierung mit Keimen, zu befürchten, was beim Menschen nach Genuß der entsprechenden Lebensmittel zu schwerwiegenden gesundheitlichen Schäden führen kann.

Besondere Anforderungen werden daher bei der Durchflußmessung von Lebensmitteln an die Anschlußeinrichtung des Massendurchflußmeßgeräts sowie an den Anschluß des Leitungssystems gestellt, an den das Massendurchflußmeßgerät angeschlossen wird. Neben bestimmten Materialvorgaben sind auch bestimmte Spaltmaße vorgegeben, so daß insgesamt ein hygienisches Hindurchleiten der Lebensmittel durch das Massendurchflußmeßgerät gewährleistet werden kann. Die hierzu verwendeten Anschlüsse werden allgemein als Lebensmittelanschlüsse bzw. als hygienische Anschlüsse bezeichnet. Dabei ist eine Vielzahl von hygienischen Anschlüssen bekannt, wie "Tri-Clamp"-Anschlüsse, DIN11851/SC-Verschraubungen, IDF/ISS-Verschraubungen, RJT-Verschraubungen, SMS-Verschraubungen und die in Japan gebräuchlichen "IDF-Clamp"-Anschlüsse.

Aufgrund der Vielzahl von Arten an hygienischen Anschlüssen besteht bei der Herstellung eines Massendurchflußmeßgeräts, das im Lebensmittelbereich verwendet werden soll, ein Problem derart, daß je nach Kundenwunsch unterschiedliche Arten von hygienischen Anschlüssen am Massendurchflußmeßgerät angebracht werden müssen. Eine gewisse Modularität dafür ist bisher dadurch erreicht worden, daß Adaptereinrichtungen verwendet worden sind, die den Übergang auf die jeweils erforderliche Art des hygienischen Anschlusses gewährleisten. Dies ist jedoch mechanisch und konstruktiv aufwendig, wobei ferner zusätzliche Dichtungen vorgesehen werden müssen, die die Gefahr einer Leckage erhöhen.

Dementsprechend ist es die Aufgabe der Erfindung, ein solches Massendurchflußmeßgerät, das nach dem Coriolis-Prinzip arbeitet, anzugeben, das auf einfache Weise mit unterschiedlichen Arten von hygienischen Anschlüssen hergestellt werden kann.

Ausgehend von dem eingangs beschriebenen Massendurchflußmeßgerät ist die zuvor hergeleitete und aufgezeigte Aufgabe dadurch gelöst, daß die Anschlußeinrichtung des Massendurchflußmeßgeräts ein Verbindungsteil und ein davon separates Befestigungsteil aufweist, das Verbindungsteil mit einem Ende der Coriolis-Leitung verschweißt ist sowie für die Herstellung einer leitenden Verbindung der Coriolis-Leitung mit dem Leitungssystem über den Anschluß des Leitungssystems vorgesehen ist und das Befestigungsteil mit dem Gehäuse des Massendurchflußmeßgeräts fest verbunden ist sowie für die Befestigung des Massendurchflußmeßgeräts an dem Anschluß des Leitungssystems vorgesehen ist.

Erfindungsgemäß sind somit die beiden Funktionen, die die Anschlußeinrichtung des Massendurchflußmeßgeräts bereitstellen muß, nämlich einerseits eine leitenden Verbindung der Coriolis-Leitung mit dem Leitungssystem bereitzustellen und andererseits die Befestigung des Massendurchflußmeßgeräts an dem Anschluß des Leitungssystems zu gewährleisten, in zwei voneinander verschiedenen Bauteilen realisiert. Einerseits ist nämlich ein Verbindungsteil vorgesehen, das eine abgedichtete Verbindung zum Leitungssystem herstellen soll, und andererseits wird die Befestigung des Massendurchflußmeßgeräts mittels des Befestigungsteils realisiert. Dabei muß nur das Verbindungsteil mit der Coriolis-Leitung verbunden werden, erfindungsgemäß nämlich durch Verschweißen, so daß die Anforderungen, die sich an das Material des Verbindungsteils ergeben, um eine gute Schweißverbindung mit der Coriolis-Leitung zu gewährleisten, nicht auch für das Befestigungsteil gelten. Häufig ist die Coriolis-Leitung aus Titan hergestellt, so daß eine sichere Schweißverbindung zwischen dem Verbindungsteil und der Coriolis-Leitung dadurch gewährleistet wird, daß das Verbindungsteil ebenfalls aus Titan besteht. Dagegen ist die Verwendung von Titan für das Befestigungsteil erfindungsgemäß nicht erforderlich, so daß dieses z.B. aus wesentlich preisgünstigerem Edelstahl gefertigt sein kann.

Die Verbindung der Coriolis-Leitung mit dem Leitungssystem kann auf unterschiedliche Weisen realisiert werden. Gemäß einer bevorzugten Weiterbildung der Erfindung ist jedoch vorgesehen, daß das Verbindungsteil auf ein Ende der Coriolis-Leitung aufgesetzt ist und auf seiner freien Seite eine Dichtfläche aufweist, die gegenüber dem Anschluß des Leitungssystems wirkt. Im allgemeinen kommt es dabei zu keiner direkten Auflage der Dichtfläche des Verbindungsteils auf einer Dichtfläche des Anschlusses des Leitungssystems. Vielmehr ist zwischen den beiden Dichtflächen eine Dichtung vorgesehen, insbesondere in Form eines Dichtrings, wie einer O-Ring-Dichtung.

Das Befestigungsteil kann auf verschiedene Weisen mit dem Gehäuse des Massendurchflußmeßgeräts fest verbunden sein, insbesondere kann es nämlich mit diesem verschweißt sein. Gemäß einer bevorzugten Weiterbildung der Erfindung ist jedoch vorgesehen, daß das Befestigungsteil auf das Gehäuse des Massendurchflußmeßgeräts aufgeschraubt ist. Dazu kann insbesondere vorgesehen sein, daß das Befestigungsteil ein Innengewinde aufweist, das auf ein auf der Außenseite eines Endes des Gehäuses vorgesehenes Außengewinde aufschraubbar ist.

Die weiter oben hergeleitete und aufgezeigte Aufgabe ist ausgehend von dem eingangs beschriebenen Massendurchflußmeßgerät ferner dadurch gelöst, daß die Anschlußeinrichtung des Massendurchflußmeßgeräts ein Verbindungsteil und ein Verstärkungsteil aufweist, das Verstärkungsteil auf ein Ende der Coriolis-Leitung aufgesetzt ist sowie an dem Gehäuse des Massendurchflußmeßgeräts gehalten ist und das Verbindungsteil mit der Coriolis-Leitung und mit dem Verstärkungsteil verschweißt ist sowie für die Herstellung einer leitenden Verbindung der Coriolis-Leitung mit dem Leitungssystem über den Anschluß des Leitungssystems vorgesehen ist.

Insofern ist also erfindungsgemäß vorgesehen, daß die Coriolis-Leitung an einem Ende mit einem Verstärkungsteil versehen ist, das zusammen mit der Coriolis-Leitung mit dem Verbindungsteil verschweißt ist. Dies ist insofern vorteilhaft, als daß typische Wandstärken der Coriolis-Leitung häufig sehr gering sind, nämlich bis zu unter 1 mm betragen, so daß es ohne das Vorsehen des erfindungsgemäßen Verstärkungsteils auf dem Ende der Coriolis-Leitung bei der Montage und im Betrieb des Massendurchflußmeßgeräts leicht zu einer Beschädigung im Anschlußbereich kommen könnte.

Das Verstärkungsteil kann grundsätzlich selbst an dem Gehäuse gehalten sein. Gemäß einer bevorzugten Weiterbildung der Erfindung ist jedoch ein von dem Verstärkungsteil separates Halteteil vorgesehen, mit dem das Verstärkungsteil an dem Gehäuse des Massendurchflußmeßgerätes gehalten ist. Damit ergibt sich der schon weiter oben angesprochene Vorteil, daß lediglich das Verstärkungsteil zur Gewährleistung einer sicheren Schweißverbindung mit einer aus Titan bestehenden Coriolis-Leitung ebenfalls aus Titan bestehen muß. Das typischerweise wesentlich größere Halteteil kann dann aus einem preiswerteren Material, wie Edelstahl, hergestellt sein.

Das Halteteil kann auf verschiedene Weisen an dem Gehäuse des Massendurchflußmeßgeräts befestigt sein, insbesondere kann es nämlich mit diesem verschweißt sein. Gemäß einer bevorzugten Weiterbildung der Erfindung ist jedoch vorgesehen, daß das Halteteil auf das Gehäuse aufgeschraubt ist. Ähnlich wie bei dem weiter oben beschriebenen Befestigungsteil, weist das Halteteil dazu ein Innengewinde auf, das auf ein auf der Außenseite des Gehäuses des Massendurchflußmeßgeräts vorgesehenes Außengewinde aufschraubbar ist. Durch Aufschrauben des Halteteils auf das Gehäuse kann das Verstärkungsteil dann mittels des Halteteils, ähnlich wie bei einer Überwurfmutter, auf das Gehäuse aufgeklemmt werden.

Das Verstärkungsteil soll die Coriolis-Leitung bei ihrer Befestigung mit dem Verbindungsteil mechanisch verstärken und entlasten. Dazu kann insbesondere vorgesehen sein, daß das Verstärkungsteil die Coriolis-Leitung über ihren gesamten Umfang vollständig umschließt. Insbesondere ist ferner vorteilhaft, daß das Verstärkungsteil mit seinem Innenbereich vollständig auf der Außenseite der Coriolis-Leitung aufliegt.

Im einzelnen gibt es nun eine Vielzahl von Möglichkeiten, das erfindungsgemäße Massendurchflußmeßgerät auszugestalten und weiterzubilden. Dazu wird auf die den unabhängigen Patentansprüchen nachgeordneten Patentansprüche sowie auf die nachfolgende Beschreibung bevorzugter Ausführungsbeispiele der Erfindung unter Bezugnahme auf die Zeichnung verwiesen. In der Zeichnung zeigt
- Fig. 1: die Verbindung eines Massendurchflußmeßgeräts gemäß einem ersten bevorzugten Ausführungsbeispiel der Erfindung mit dem Anschluß eines Leitungssystems im Schnitt und
- Fig. 2: die Anschlußeinrichtung eines Massendurchflußmeßgeräts gemäß einem zweiten bevorzugten Ausführungsbeispiel der Erfindung im Schnitt.

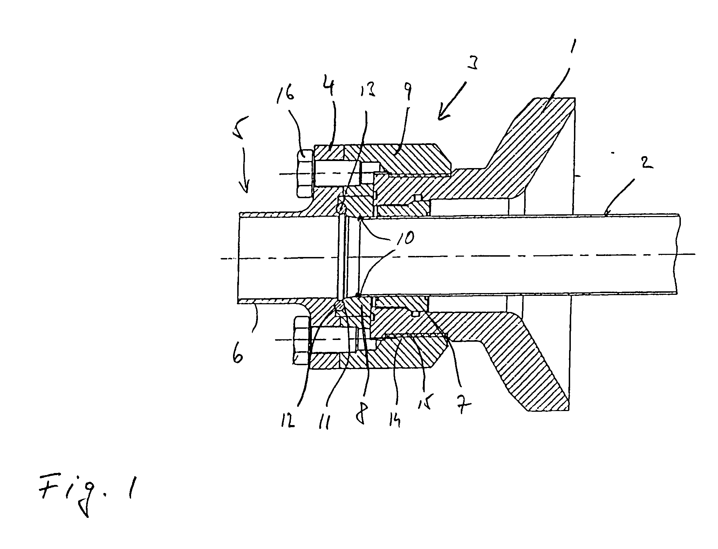

Das aus Fig. 1 ersichtliche Massendurchflußmeßgerät gemäß dem ersten bevorzugten Ausführungsbeispiel der Erfindung weist ein Gehäuse 1, eine Coriolis-Leitung 2 und eine Anschlußeinrichtung 3 zum Anschließen des Massendurchflußmeßgeräts an einen Anschluß 4 eines Leitungssystems 5 auf. Von dem Leitungssystems 5 ist lediglich ein Rohr 6 gezeigt, das mit dem als Anschlußflansch ausgebildeten Anschluß 4 zum Anschließen des Massendurchflußmeßgeräts versehen ist.

Auf der Seite des Massendurchflußmeßgeräts ist die Coriolis-Leitung 2 mittels eines Zwischenrings 7 in dem Gehäuse 1 befestigt. Die Anschlußeinrichtung 3 des Massendurchflußmeßgeräts wird von einem Verbindungsteil 8 und einem davon separaten Befestigungsteil 9 gebildet. Das Verbindungsteil 8 ist mit dem dargestellten Ende der Coriolis-Leitung 2 verschweißt, wie mittels der Schweißnaht 10 angedeutet. Wie aus Fig. 1 ferner ersichtlich, dient das Verbindungsteil 8 zur Herstellung einer leitenden Verbindung der Coriolis-Leitung 2 mit dem Leitungssystem 5 über den Anschluß 4. Dazu ist das Verbindungsteil 8 auf das Ende der Coriolis-Leitung 2 aufgesetzt und weist auf seiner freien Seite eine Dichtfläche 11 auf, die mit einer an dem Anschluß 4 des Leitungssystems 5 vorgesehenen Dichtfläche 12 zusammenwirkt, nämlich mittels einer dazwischen liegenden, als Dichtring ausgebildeten Dichtung 13. Damit wird ein abgedichteter Übergang vom Leitungssystem 5 auf die Corio' lis-Leitung 2 des Massendurchflußmeßgeräts realisiert.

An diesen abgedichteten Übergang werden keinerlei Anforderungen bezüglich der Halterung des Massendurchflußmeßgeräts gestellt. Zur Halterung des Massendurchflußmeßgeräts, also zu dessen Befestigung an dem Anschluß 4 des Leitungssystems 5, dient nämlich das Befestigungsteil 9, das ein Innengewinde 14 aufweist, das auf ein an einem Ende auf der Außenseite des Gehäuses 1 vorgesehenes Außengewinde 15 aufgeschraubt ist. Damit ist das Befestigungsteil 9 mit dem Gehäuse 1 des Massendurchflußmeßgeräts fest verbunden, wobei die eigentliche Befestigung des Massendurchflußmeßgeräts an dem Anschluß 4 des Leitungssystems 5 dadurch realisiert ist, daß das Befestigungsteil 9 mittels Schrauben 16 an dem Anschluß 4 gehalten ist.

Insgesamt ist durch die aus dem Verbindungsteil 8 und dem Befestigungsteil 9 bestehende Anschlußeinrichtung 3 des Massendurchflußmeßgeräts ein Standardanschlußsystem realisiert, das dem kundenseitig vorhandenen Anschluß 4 entspricht. Dabei ist vorliegend jedoch vorgesehen, daß zur Realisierung einer sicheren Schweißverbindung zwischen dem Verbindungsteil 8 und der Coriolis-Leitung 2 das Verbindungsteil 8, wie auch die Coriolis-Leitung 2, aus Titan hergestellt ist. Im Gegensatz dazu ist das Befestigungsteil 9, das, wie Fig. 1 entnehmbar, konstruktiv wesentlich aufwendiger gestaltet ist und für das mehr Material erforderlich ist, aus einem preiswerteren Material hergestellt, nämlich aus Edelstahl. Die mit Titan verbundenen und für die Eigenschaften der Coriolis-Leitung 2 wesentlichen Vorteile bestehen nämlich für das Befestigungsteil 9 nicht, so daß hier auch mit Edelstahl eine hinreichende Funktionalität erreicht wird.

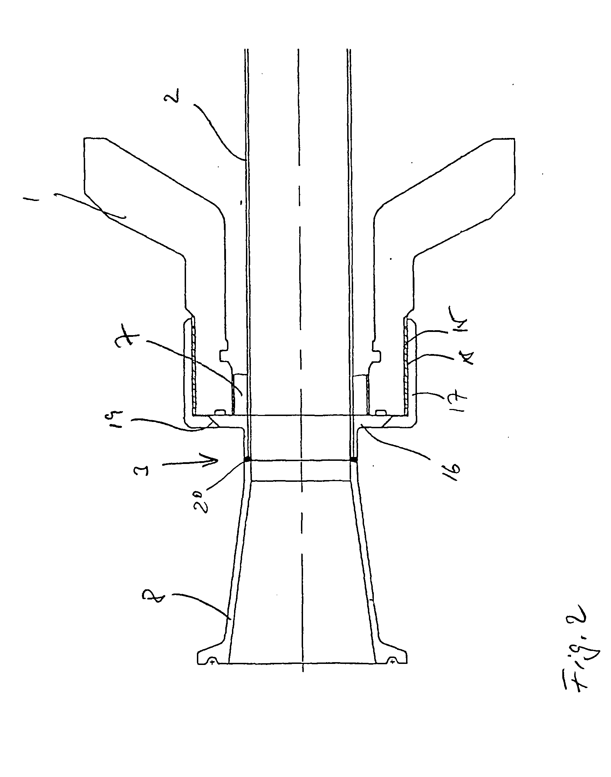

Bei dem in Fig. 2 ausschnittsweise dargestellten Massendurchflußmeßgerät gemäß dem zweiten bevorzugten Ausführungsbeispiel der Erfindung sind ebenfalls ein Gehäuse 1, eine Coriolis-Leitung 2 und eine Anschlußeinrichtung 3 mit einem Verbindungsteil 8 zum Anschließen des Massendurchflußmeßgeräts an einen nicht weiter dargestellten Anschluß eines Leitungssystems vorgesehen. Die Form des Verbindungsteils 8 auf seiner freien Seite entspricht einem Standardanschluß, vorliegend nämlich dem "Tri-Clamp"-System.

Gemäß dem zweiten bevorzugten Ausführungsbeispiel der Erfindung ist nun vorgesehen, daß die Anschlußeinrichtung 3 des Massendurchflußmeßgeräts außer dem Verbindungsteil 8, das für die Herstellung einer leitenden Verbindung der Coriolis-Leitung 2 mit dem Leitungssystem über dessen Anschluß vorgesehen ist, ein Verstärkungsteil 16 aufweist. Das Verstärkungsteil 16 ist auf das dargestellte Ende der Coriolis-Leitung 2 aufgesetzt und an dem Gehäuse des Massendurchflußmeßgeräts mittels eines Halteteil 17 gehalten. Dazu weist das Halteteil 17 ein Innengewinde 18 auf, mit dem es auf ein Außengewinde 15 auf dem Gehäuse 1 aufgeschraubt ist. Aufgrund einer konisch verlaufenden Ausnehmung 19 in der Vorderseite des Halteteils 17 und einer entsprechenden Form des Verstärkungsteils 16 wird das Verstärkungsteil 16 beim Aufschrauben des Halteteils 17 auf das Gehäuse 1 aufgeklemmt. Um seiner Funktion als Sicherung und Verstärkung der Coriolis-Leitung 2 nachzukommen, umschließt das Verstärkungsteil 16 die Coriolis-Leitung 2 über ihren gesamten Umfang vollständig und liegt dabei ferner mit seinem Innenbereich vollständig auf der Außenseite der Coriolis-Leitung 2 auf.

Das Verstärkungsteil 16 dient dem Schutz und der Verstärkung der Coriolis-Leitung 2 und ist gemeinsam mit der Coriolis-Leitung 2 mit dem Verbindungsteil 8 verschweißt, was mittels einer gemeinsamen Schweißnaht 20 angedeutet ist. Vorliegend kann also, ähnlich wie beim ersten bevorzugten Ausführungsbeispiel der Erfindung, das Material des Halteteils 17 von dem Material der Coriolis-Leitung 2 und dem Material des Verstärkungsteils 16 verschieden sein. Bei einer aus Titan bestehenden Coriolis-Leitung muß nämlich das Halteteil 17 insbesondere nicht auch aus Titan bestehen, da keine Schweißverbindung des Halteteils 17 mit der Coriolis-Leitung 2 vorgesehen ist.

## Patentansprüche

1. Massendurchflußmeßgerät, das nach dem Coriolis-Prinzip arbeitet, mit einem Gehäuse (1), einer Coriolis-Leitung (2) und einer Anschlußeinrichtung (3) zum Anschließen des Massendurchflußmeßgeräts an einen Anschluß (4) eines Leitungssystems (5), **dadurch gekennzeichnet, daß** die Anschlußeinrichtung (3) des Massendurchflußmeßgeräts ein Verbindungsteil (8) und ein davon separates Befestigungsteil (9) aufweist, das Verbindungsteil (8) mit einem Ende der Coriolis-Leitung verschweißt ist sowie für die Herstellung einer leitenden Verbindung der Coriolis-Leitung (2) mit dem Leitungssystem (5) über den Anschluß (4) des Leitungssystems (5) vorgesehen ist und das Befestigungsteil (9) mit dem Gehäuse (1) des Massendurchflußmeßgeräts fest verbunden ist sowie für die Befestigung des Massendurchflußmeßgeräts an dem Anschluß (4) des Leitungssystems (5) vorgesehen ist.

2. Massendurchflußmeßgerät nach Anspruch 1, **dadurch gekennzeichnet, daß** das Verbindungsteil (8) aus dem gleichen Material besteht, wie die Coriolis-Leitung (2), vorzugsweise nämlich aus Titan.

3. Massendurchflußmeßgerät nach Anspruch 1 oder 2, **dadurch gekennzeichnet, daß** das Material des Befestigungsteils (9) von dem Material des Verbindungsteils (8) verschieden ist.

4. Massendurchflußmeßgerät nach einem der Ansprüche 1 bis 3, **dadurch gekennzeichnet, daß** das Verbindungsteil (8) auf ein Ende der Coriolis-Leitung (2) aufgesetzt ist und auf seiner freien Seite eine Dichtfläche (11) aufweist, die gegenüber dem Anschluß (4) des Leitungssystems (5) wirkt, vorzugsweise unter Zwischenschaltung einer Dichtung (13).

5. Massendurchflußmeßgerät nach einem der Ansprüche 1 bis 4, **dadurch gekennzeichnet, daß** das Befestigungsteil (9) auf das Gehäuse (1) des Massendurchflußmeßgeräts aufgeschraubt ist.

6. Massendurchflußmeßgerät, mit einem Gehäuse (1), einer Coriolis-Leitung (2) und einer Anschlußeinrichtung (3) zum Anschließen des Massendurchflußmeßgeräts an einen Anschluß (4) eines Leitungssystems (5), **dadurch gekennzeichnet, daß** die Anschlußeinrichtung (3) des Massendurchflußmeßgeräts ein Verbindungsteil (8) und ein Verstärkungsteil (16) aufweist, das Verstärkungsteil (16) auf ein Ende der Coriolis-Leitung (2) aufgesetzt ist sowie an dem Gehäuse (1) des Massendurchflußmeßgeräts gehalten ist und das Verbindungsteil (8) mit der Coriolis-Leitung (2) und mit dem Verstärkungsteil (16) verschweißt ist sowie für die Herstellung einer leitenden Verbindung der Coriolis-Leitung (2) mit dem Leitungssystem (5) über den Anschluß (4) des Leitungssystems vorgesehen ist.

7. Massendurchflußmeßgerät nach Anspruch 6, **dadurch gekennzeichnet, daß** ein von dem Verbindungsteil (8) separates Halteteil (17) vorgesehen ist, mit dem das Verstärkungsteil (16) an dem Gehäuse (1) des Massendurchflußmeßgeräts gehalten ist.

8. Massendurchflußmeßgerät nach Anspruch 7, **dadurch gekennzeichnet, daß** das Halteteil (17) auf das Gehäuse (1) aufgeschraubt ist.

9. Massendurchflußmeßgerät nach Anspruch 8, **dadurch gekennzeichnet, daß** das Verstärkungsteil (16) mittels des Halteteils (17) auf das Gehäuse (1) aufgeklemmt ist.

10. Massendurchflußmeßgerät nach einem der Ansprüche 7 bis 9, **dadurch gekennzeichnet, daß** das Material des Halteteils (17) von dem Material des Verstärkungsteil (16) verschieden ist.

11. Massendurchflußmeßgerät nach einem der Ansprüche 6 bis 10, **dadurch gekennzeichnet, daß** das Verbindungsteil (8) und/oder das Verstärkungsteil (16) aus dem gleichen Material besteht, wie die Coriolis-Leitung (2), vorzugsweise nämlich aus Titan.

12. Massendurchflußmeßgerät nach einem der Ansprüche 6 bis 11, **dadurch gekennzeichnet, daß** das Verstärkungsteil (16) die Coriolis-Leitung (2) über ihren gesamten Umfang vollständig umschließt.

13. Massendurchflußmeßgerät nach einem der Ansprüche 6 bis 12, **dadurch gekennzeichnet, daß** das Verstärkungsteil (16) mit seinem Innenbereich vollständig auf der Außenseite der Coriolis-Leitung (2) aufliegt.

14. Massendurchflußmeßgerät nach einem der Ansprüche 1 bis 13, **dadurch gekennzeichnet, daß** die Anschlußeinrichtung (3) des Massendurchflußmeßgeräts und der Anschluß (4) des Leitungssystems (5) als Lebensmittelanschlüsse ausgebildet sind.
